# EUROPEAN PATENT SPECIFICATION

(11) **EP 3 309 465 B1**
(45) Date of publication and mention of the grant of the patent: **20.05.2020**
(21) Application number: 17195591.7
(22) Date of filing: 10.10.2017
(51) Int. Cl.: F24D 19/10, F15B 19/00, G05B 23/02, F16K 37/00

(54) **FAULT DETECTION OF VALVE ARRANGEMENT**
FEHLERDETEKTION EINER VENTILANORDNUNG
DÉTECTION DE DÉFAUT D'AGENCEMENT DE VANNE

(30) Priority: 12.10.2016 DK 201600620
(43) Date of publication of application: 18.04.2018
(73) Proprietor: Danfoss A/S, 6430 Nordborg (DK)
(72) Inventor: KAVCIC, Miha, 6430 Nordborg (DK)
(74) Representative: Stevens, Brian

(56) References cited:
- EP-A1- 2 297 502
- EP-A1- 3 012 705
- US-A1- 2014 277 764

## Description

### BACKGROUND

The invention relates to a valve arrangement, especially such as a heat exchanger valve arrangement, having a pressure control valve, said pressure control valve comprising a valve element cooperating with a throttling element and controlling a differential pressure. Furthermore, the invention relates to a method for making functionally, or diagnostic, check on the valve arrangement. In heating systems, the flow rates can be controlled by flow controllers, such as valves, where these may be pressure independent valves improving the efficiency of the system.

Document US 2014/277764 A1 discloses a method comprising the features of the preamble of claim 1.

The operation of such valves may however be affected by various reasons, such as that debris etc. in the working fluid having settled in the valve partly clogging it. This would lead both to a reduced efficiency, such as of the heating system, but also to an unpredictable valve where the actual operation does not match the expectations.

The present invention is introducing means to help monitor changes in operation of the valve, thus to detect failures, or just changes, in its functionality.

### SUMMARY OF THE INVENTION

The present invention thus introduces a method to measure the functionality of a valve arrangement including a pressure control valve comprising a valve element cooperating with a throttling element and controlling a differential pressure, the method being to expose the pressure control valve to a plurality of flow rates spanning over a test range, and for each flow rate to measure the position of the valve element relative to the throttling element.

If the membrane does not deflect in reaction to changes in the differential pressure over it, this may be an indication something is fault in the valve arrangement.

According to the invention the method includes changing the flow rate from a first limit flow rate of said test range to a second limit flow rate, and subsequently changing from said second limit flow rate to said first limit flow rate, and for each flow rate to measure the position of the valve element relative to the throttling element, the measurement data thus forms a measured hysteresis, the method including to compare this measured hysteresis to an expected standard hysteresis of a generally well working valve and system, and using possible deviations to identify that the valve arrangement does not function according to said expected standard hysteresis.

In an embodiment said flow rate is adjusted by a flow control valve comprising a flow control valve element and a valve seat, and where said test range first limit corresponds to and first opening position and said second limit corresponds to second opening position of the position of the flow control valve element relative to the throttling element.

In an embodiment the flow control valve element is maintained in each position for sufficient long time for the pressure control valve to adjust to a get a constant delta pressure, dP, over the control valve.

In an embodiment the time for the flow control valve element to become substantially stable relative to the throttling element when the flow rate has been changed is used as a parameter in the detection that the valve arrangement does not function according to said expected standard hysteresis.

If the valve element e.g. takes longer time than expected to react this may also be an indication of a fault in said valve arrangement.

In an embodiment said valve arrangement comprise said pressure control valve and said a flow control valve connected in series, said pressure control valve controlling the differential pressure (P2-P3) over said flow control valve.
The present invention further relate to the valve arrangement having a pressure control valve, said pressure control valve comprising a valve element cooperating with a throttling element and controlling a differential pressure, characterized in that detecting means are provided measuring the position of said valve element, and where said measured position is communicated to a processer where it is compared to an expected position and where deviations are used to estimate the functionality of said valve arrangement.

In an embodiment said detecting means is in data communication to a processor comprising the expected position data of the valve element and an algorithm to compare the measured position to the expected position.

In an embodiment a flow control valve is connected in series with said pressure control valve, said pressure control valve controlling the differential pressure (P2-P3) over said flow control valve.

In an embodiment said detecting means comprise a position sensor, a potentiometer and / or a Hall sensor.

In an embodiment said detecting means comprise a magnet, said magnet being connected to said valve element.

In an embodiment said valve element is in form of a hollow piston connected to a membrane, an interior space of said piston forming an intermediate region, said membrane being loaded by a pressure (P2) in said intermediate region in a direction away from said throttling element and by a pressure downstream said flow control valve in a direction towards said throttling element.

In an embodiment the present invention relate to the processor adapted to control a valve arrangement and including means to make the functionality testing according to any of the previous embodiments.

### FIGURES

- Fig. 1: is a schematic illustration of a heating system and
- Fig. 2: is a schematic illustration of a heat exchanger valve arrangement, and
- Fig. 3: is a schematic illustration of another valve arrangement.
- Fig. 4: is a schematic illustration of a diagnostic procedure according to an embodiment
- Fig.5: illustrate the measured hysteresis according to a diagnostic procedure according to an embodiment
- Fig. 6A-D: illustrates different standard hysteresis and measured hysteresis

### DETAILED DESCRIPTION OF THE INVENTION

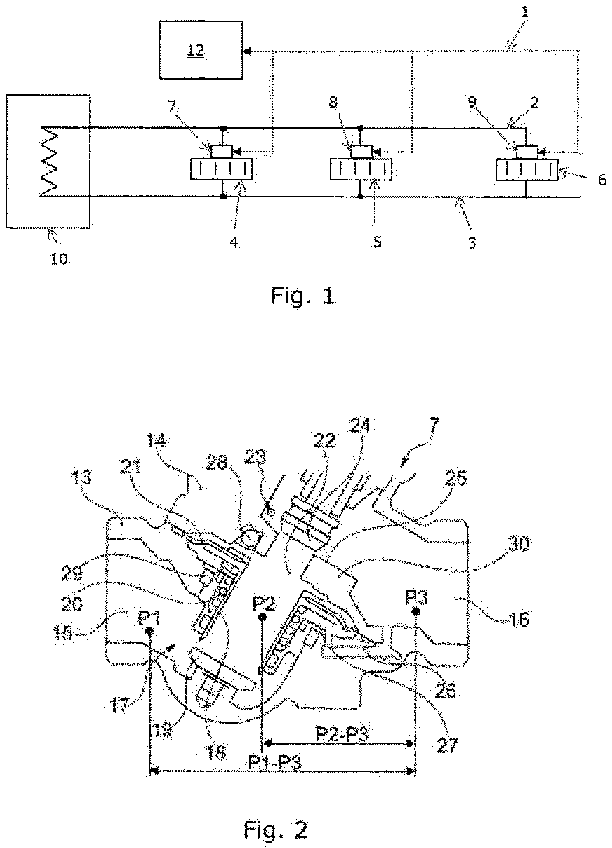

Fig. 1 shows schematically a heating system 1 comprising a feed line arrangement 2 and a return line arrangement 3. A plurality of heat exchangers 4, 5, 6 are connected between the feed line arrangement 2 and the return line arrangement 3. Each heat exchanger 4, 5, 6 is operating in connection or provided with a valve arrangement 7, 8, 9 which will be described in more detail in connection with fig. 2. In the illustration three heat exchangers 4, 5, 6 and three valve arrangements 7, 8, 9 is seen, but any amount as long as there are at least one valve arrangement 7 would apply to the present invention, with or without it being operating in connection to a heat exchanger 4, 5, 6. The feed line arrangement 2 and the return line arrangement 3 are connected to a boiler 10. A controller 12 is in data exchange communication to the valve arrangements 7, 8, 9.

A heat carrier medium is circulated in the heating system 1 such as by a circulation pump (not illustrated), for example heating water, which has been heated in the boiler 10. To this end the circulation pump has to increase the pressure of the heat carrier medium in the feed line arrangement 2. This pressure must be high enough so that all heat exchanger 4, 5, 6 can satisfy their demand. The boiler could be a heat exchanger connected to a heating fluid supply such as it is common in e.g. district heating systems.

Fig. 2 shows schematically an embodiment of a valve arrangement 7, the valve arrangements 8, 9 could have the same construction.

The valve arrangement 7 comprises a housing having a first part 13 and a second part 14. The housing has an inlet 15 and an outlet 16. The inlet 15 is connected to the circulation pump 11 by means of the feed line arrangement 2. Heat carrier medium reaching the inlet 15 has a pressure P1.

A pressure control valve 17 is positioned downstream the inlet 15 and comprises a valve element 18 in form of a hollow piston and a throttling element 19.

A spring 20 acts on the valve element 18 in a direction away from the throttling element 19. Furthermore, the valve element 18 is connected to a membrane 21.

The hollow interior of the valve element 18 forms an intermediate region 22. Heat carrier medium in this intermediate region 22 has a pressure P2.

A flow control valve 23 is arranged downstream said pressure control valve 17. The flow control valve 23 comprises a flow control valve element 24 and a valve seat 25. The outlet 16 is arranged downstream the flow control valve 23. Heat carrier medium in the outlet 16 has a pressure P3.

The pressure P2 of the intermediate region 22 acts on the membrane 21 in a direction towards the throttling element 19. The outlet 16 is connected via a channel 26 to a space 27 so that the pressure P3 of the outlet 16 acts on the membrane in a direction opposite to the pressure P2 of the intermediate region 22.

It can be seen that pressure P1 in the inlet 15 is higher than pressure P2 in the intermediate region 22. Pressure P2 in the intermediate region 22 is higher than pressure P3 in the outlet 16.

It can furthermore be derived from fig. 2 that the differential pressure P2-P3 over the flow control valve 23 is the same as the differential pressure P2-P3 over the membrane 21. This differential pressure P2-P3 creates a force on the membrane 21 corresponding to the force of the spring 20. The valve element 8 takes a position in which the differential pressure P2-P3 and the force of the spring 20 are in equilibrium.

When the pressure P1 at the inlet 15 increases, the pressure P2 in the intermediate region 22 increases as well and shifts the valve element 8 in a directions towards the throttling element 9 so that the pressure P2 in the intermediate region 22 decreases. When the pressure P1 at the inlet 15 decreases, the pressure P2 in the intermediate region 22 decreases as well so that the valve element 18 is moved away from the throttling element 19 by the force of the spring 20 so that the pressure P2 in the intermediate region 22 increases again.

In the illustrated embodiment, a Hall sensor 28 is arranged in the second part 14 of the housing. A magnet 29 is fixed to the valve element 8, preferably at the end of the valve element 18 facing the flow control valve 23.

The Hall element 28 together with the magnet 29 serve as detecting means for detecting whether the valve element 18 is able to perform the pressure control function or not. In other words, the Hall sensor 28 together with the magnet 29 forms a position sensor outputting a maximum signal in case the valve element 18 has the largest distance from the throttling element 19.

Since the pressure P2 in the intermediate region 22 cannot be larger than the pressure P1 in the inlet 5, the force of the spring 20 moves the valve element 18 away from the throttling element 19, until it comes to rest against an intermediate wall 30 in which the valve seat 25 of the flow control valve 23 is formed. In this case the pressure P1 in the inlet 15 is the same as the pressure P2 in the intermediate region 22 and the valve element 18 is not able to move in a direction towards the throttling element 19 to control the differential pressure or pressure difference P2-P3 over the flow control valve 23. This situation can easily be detected by the Hall sensor 28 which outputs a corresponding signal to the controller 12. The controller 12 thus being 'aware' of the differential pressure of the valve arrangement 7, and also the valve arrangements 8, 9 in the illustration as they are similar and also in data exchange communication to the controller 12.

The Hall sensor 28 can easily detect whether the valve element 18 can be moved by the pressure P2 in the intermediate region 22. If the differential pressure P2-P3 is smaller than a predetermined minimum value which corresponds to the minimum force of the spring 20, then no control of the differential pressure is possible. When using a Hall sensor 28 and a magnet 29 no pressure sensor or pressure switch is necessary. This would achieve the same result but would be less cost effective.

In this manner having the awareness of the position of the valve element 18 enables the system monitor the valve arrangement 7 introducing an additional diagnostic function of if, and optionally of the heating system where to it is connected. If, for example, debris has clocked in the valve arrangement 7 the Hall sensor 28 of the valve arrangement 7 may help notice a change in the operation to identify the existence of a problem such as clocking.

In an embodiment, such pressure increase is made step by step or incrementally, wherein each increment corresponds to the predetermined minimum a value, which, in term corresponds to the minimum force of the spring 20.

In another or additional embodiment the plural of valve arrangements 7, 8, 9 helps to identify the point of clogging in feed line arrangement 2 such as by comparing the measured positions of the valve elements 18 showing which of the valve arrangements 7, 8, 9 that registers a change.

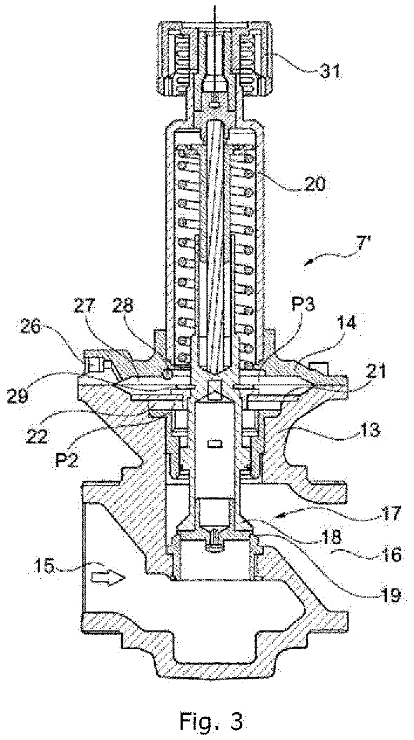

Fig. 3 shows another valve arrangement 7'. Elements corresponding to elements of Fig. 2 are designated with the same reference numerals.

The valve arrangement 7' of Fig. 3 comprises a pressure control valve 17 only. Such a valve is designed to maintain a constant set differential pressure. Via an internal connection and together with a spring 20 pressure in the outlet 16 acts on the underside of the membrane 21 while via an impulse tube 26 pressure in a flow pipe acts on the top of the membrane 21, i.e. in space 27. In this way the balancing valve maintains adjusted differential pressure.

This differential pressure in the illustrated embodiment can be adjusted by turning a knob 31 which changes the force of spring 20.

The valve 7' embodiment includes a hall sensor 28 as well there is and a magnet 29 forming detecting means which may be provided to detect whether a differential pressure adjusted by the valve arrangement 7' exceeds a predetermined minimum value.

Though the illustrated embodiments operate through a sensor 30 formed of a hall sensor 28 and a magnet 29, these may be exchanged by any other suitable sensor 30 able of sensing the differential pressure over the valve arrangement 7, 7', such as by measuring the position of a part within the valve arrangement itself like a valve element 18 and / or the deflection of a membrane 21.

Including such a sensor 30 enables tracking the relation of the positon of the valve element 18 to the deflection of e.g. the membrane 21 giving a relation to the differential pressure.
In an embodiment the time for the valve element (18) to become substantially stable relative to the throttling element (19) when the flow rate have been change is used as a parameter in the detection that the valve arrangement does not function according to the expectations.

The present invention relate to a method this relation and use it for fault detection, such as for testing of the valve arrangement 7,7' are operating according to the expectations.

In one embodiment, such as, but not exclusively, for valve arrangements 7 like that of fig. 2, the flow control valve 23 is set at one or a plural of different valve openings, by positioning said flow control valve element 24 relative to said valve seat 25 over a test range of positions according to a possible pre-scheduled scheme. The test range of positions either covers the full opening range of the flow control valve 23, from fully closed to fully open, or a sub-range of this full range. For each position the flow control valve element 24 is maintained for sufficient long time for the pressure control valve 17 to adjust to a get a constant delta pressure, dP, over the control valve 17. Once an upper limit of the test range is reached, the procedure is reversed going back to an lower limit of the test range for each step reducing the valve opening.

In more general terms, valve arrangement 7, 7' is exposed to a range of changing flow rates spanning from a first limit to a second limit of a test range. The flow rates could in some embodiments be induced e.g. by pumping means able to adjust the flow rate, or by a control valve 23 connected to control the flow rate through the valve arrangement 7, 7'. In some embodiments, such as illustrated in fig. 2, the control valve 23 is integrated into the valve arrangement 7, 7'.

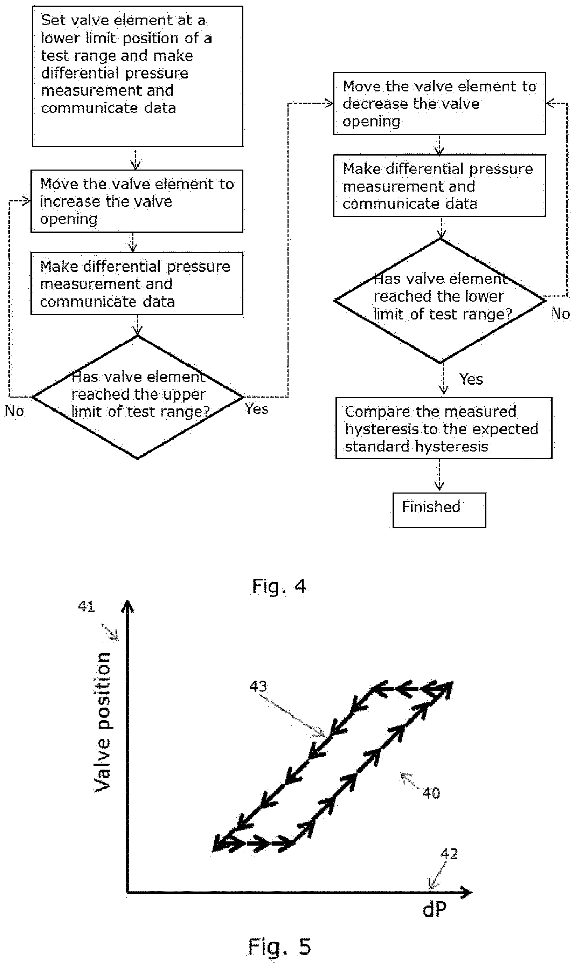

The procedure, or method, is also illustrated in fig. 4 according to the embodiment where the flow rate is changed by a control valve 23, but the same would also apply where the flow rate are being changed by other means, like an adjustable pump.

The first step of the method includes setting flow rate at the first limit of said test range, such as setting the valve opening of the flow control valve 23 at a first limit position, where this first limit may be a lower limit, such as a lower opening position of said flow control valve element 24 relative to said valve seat 25. The defined test range may cover a defined span of flow rates, such as valve openings of said flow control valve 23 between fully closed valve opening (e.g. where the flow control valve element 24 is in contact to the valve seat 25 to close off any flow through the valve according to the above embodiments) and to fully opened (e.g. where the flow control valve element 24 is at it's at the largest possible distance to the valve seat 25 to close off any flow through the valve according to the above embodiments). The sensor 30 then makes a measurement of the membrane 21 position, being representative of the valve element position 18 and the differential pressure dP and communicates the data e.g. to a processor.

Such communications and means to store and process the data would be of any known kind.

The process then continues with a number of steps of changing the flow rate (such as changing the opening of the flow control valve 23 e.g. according to a defined scheme) in steps from the first limit of the test range to the second limit, and for each step the sensor 30 measures the valve element position 18 representing the differential pressure dP and communicates the data e.g. to a processor.

When the second limit is reached in an embodiment the process continues by in steps changing the flow rate (such as by changing the valve opening of the flow control valve 23) from the second limit to the first limit of said test range, and for each step the sensor 30 measures the valve element position 18 representing the differential pressure dP and communicates the data e.g. to a processor.

The outcome data such forms a measured hysteresis of the flow rate relative to the corresponding differential pressure, or as illustrated, of the valve opening of the flow control valve 23 relative to the corresponding differential pressure, or at least of the position of the valve element 18. This then can be compared to an expected standard hysteresis possible giving diagnostic information if, for example, debris has clocked in the valve arrangement 7, 7'.

The sensor 30 of the valve arrangement 7, 7' thus may help notice a change in the operation to identify the existence of a problem such as clocking.

Fig. 5 illustrates such a measured hysteresis 40 relation of valve position 41 (or more generally the valve opening) of the flow control valve 23 (or more generally just the flow rate 41) to differential pressure 42, dP, (or more generally the position of the valve element 18) where each of the arrows 43 represents a measurement of one step according to the previous described process also illustrated in fig. 4.

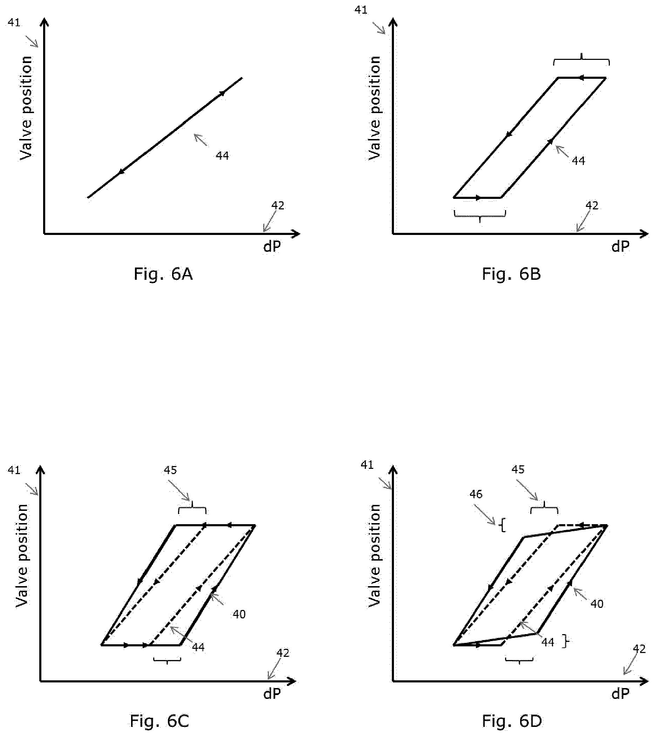

Fig. 6A is a highly schematic illustration of an ideal linear 44 standard hysteresis relation of valve position 41 of said flow control valve 23 (or more generally, just the flow rate 41) to differential pressure 42 (or of the position of the valve element 18). When the flow rate is changed the differential pressure over the membrane 21 changes and the membrane 21 deflects changing the position of said valve element 18 relative to the throttling element 19 until an equilibrium of forces have been reached, thus ensuring a constant differential pressure, dP, over the membrane 21 (and thereby also over the possible control valve 23). When the valve position is changed back to the previous position, then ideally the changing differential pressure over the membrane 21 would return back to the previous position along the same linear 44 curve.

In the real world valves does not behave ideally and thus typically undergoes some standard hysteresis 44 as illustrated in fig. 4B, where this could be due to the valve itself and / or the system in general. In the present example embodiment standard hysteresis 44 shown in Fig. 4B is to represent the standard hysteresis of the generally well working valve and system.

When referring to 'standard hysteresis 44', whether it is ideal linear as in fig. 4A or more real as in fig. 4B, is meant the expected hysteresis of the system if it is operating as expected.

Fig. 6C illustrates one example where a measured hysteresis 40 is seen to differ 45 from the standard hysteresis 44 along the differential pressure axis 42, and fig. 4D illustrate an example where the measured hysteresis 40 differs 45, 46 both along the differential pressure axis 42 and the valve position axis 42.

## Claims

1. Method to measure the functionality of a valve arrangement (7) including a pressure control valve (17) comprising a valve element (18) cooperating with a throttling element (19) and controlling a differential pressure, the method being to expose the pressure control valve (17) to a plurality of flow rates spanning over a test range, and for each flow rate to measure the position of the valve element (18) relative to the throttling element (19), **characterized in that** the method includes changing the flow rate from a first limit flow rate of said test range to a second limit flow rate, and subsequently changing from said second limit flow rate to said first limit flow rate, and for each flow rate to measure the position of the valve element (18) relative to the throttling element (19), the measurement data thus forms a measured hysteresis, the method including to compare this measured hysteresis to an expected standard hysteresis of a generally well working valve and system, and using possible deviations to identify that the valve arrangement does not function according to said expected standard hysteresis.

2. Method according to claim 1, wherein said flow rate is adjusted by a flow control valve 23 comprising a flow control valve element 24 and a valve seat 25, and where said test range first limit corresponds to and first opening position and said second limit corresponds to second opening position of the position of the valve element (18) relative to the throttling element (19).

3. Method according to claim 2, wherein the valve element (18) is maintained in each position for sufficient long time for the pressure control valve (17) to adjust to a get a constant delta pressure, dP, over the control valve (17).

4. Method according to any of the previous claims, wherein the time for the valve element (18) to become substantially stable relative to the throttling element (19) when the flow rate has been changed is used as a parameter in the detection that the valve arrangement does not function according to said expected standard hysteresis.

5. Method according to any of the claims 2-4, wherein said valve arrangement (7) comprises said pressure control valve (17) and said a flow control valve (23) connected in, said pressure control valve (17) controlling the differential pressure (P2-P3) over said flow control valve (23).

6. Valve arrangement having a pressure control valve (17), said pressure control valve (17) comprising a valve element (18) cooperating with a throttling element (19) and controlling a differential pressure, the valve arrangement further comprising detecting means (28, 29) configured to measure the position of said valve element (18), and a processor, where said measured position is communicated to said processor which is configured to compare said measured position to an expected position and configured to use deviations to estimate the functionality of said valve arrangement, and in that the valve arrangement is further configured to operate by the method according to claim 1.

7. Valve arrangement according to claim 6, wherein said detecting means is in data communication to a processor comprising the expected position data of the valve element (18) and an algorithm to compare the measured position to the expected position.

8. Valve arrangement according to claim 6 or 7, **characterized in that** a flow control valve (23) is connected in series with said pressure control valve (17), said pressure control valve (17) controlling the differential pressure (P2-P3) over said flow control valve (23).

9. Valve arrangement according to any of claims 6 to 8, **characterized in that** said detecting means (28, 29) comprise a position sensor, a potentiometer and / or a Hall sensor (28).

10. Valve arrangement according to claim 9, **characterized in that** said detecting means comprise a magnet (29), said magnet (29) being connected to said valve element (18).

11. Valve arrangement according to any of claims 6 to 10, **characterized in that** said valve element (18) is in form of a hollow piston connected to a membrane (21), an interior space of said piston forming an intermediate region (22), said membrane (21) being loaded by a pressure (P2) in said intermediate region (22) in a direction away from said throttling element (19) and by a pressure downstream said flow control valve (23) in a direction towards said throttling element (19).

12. Processor adapted to control a valve arrangement according to any of the claims 6-11 and including means to make the functionality measuring according to the method of any of the claims 1-5

## Patentansprüche

1. Verfahren zum Messen der Funktionalität einer Ventilanordnung (7), umfassend ein Drucksteuerventil (17), umfassend ein Ventilelement (18), mit einem Drosselelement (19) zusammenwirkend und einen Differenzdruck steuernd, wobei das Verfahren darin besteht, das Drucksteuerventil (17) mehreren Durchflussraten auszusetzen, die einen Testbereich überspannen, und für jede Durchflussrate die Position des Ventilelements (18) relativ zum Drosselelement (19) zu messen, **dadurch gekennzeichnet, dass** das Verfahren Ändern der Durchflussrate von einer ersten Grenzdurchflussrate des Testbereichs auf eine zweite Grenzdurchflussrate und anschließendes Ändern von der zweiten Grenzdurchflussrate auf die erste Grenzdurchflussrate umfasst, und für jede Durchflussrate die Position des Ventilelements (18) relativ zum Drosselelement (19) zu messen, wobei die Messdaten so eine gemessene Hysterese bilden, wobei das Verfahren umfasst, diese gemessene Hysterese mit einer erwarteten Standardhysterese eines im Allgemeinen gut funktionierenden Ventils und Systems zu vergleichen und mögliche Abweichungen zu verwenden, um zu identifizieren, dass die Ventilanordnung nicht entsprechend der erwarteten Standardhysterese funktioniert.

2. Verfahren nach Anspruch 1, wobei die Durchflussrate durch ein Durchflusssteuerventil 23 eingestellt wird, umfassend ein Durchflusssteuerventilelement 24 und einen Ventilsitz 25, und wobei die erste Grenze des Testbereichs einer ersten Öffnungsposition entspricht und die zweite Grenze einer zweiten Öffnungsposition der Position des Ventilelements (18) relativ zum Drosselelement (19) entspricht.

3. Verfahren nach Anspruch 2, wobei das Ventilelement (18) eine ausreichende Zeit lang in jeder Position gehalten wird, damit das Drucksteuerventil (17) sich einstellen kann, um eine konstante Druckdifferenz, dP, über dem Steuerventil (17) zu erhalten.

4. Verfahren nach einem der vorhergehenden Ansprüche, wobei die Zeit, die das Ventilelement (18) benötigt, um im Wesentlichen stabil relativ zum Drosselelement (19) zu werden, wenn die Durchflussrate geändert wurde, als ein Parameter bei der Detektion verwendet wird, dass die Ventilanordnung nicht entsprechend der erwarteten Standardhysterese funktioniert.

5. Verfahren nach einem der Ansprüche 2-4, wobei die Ventilanordnung (7) das Drucksteuerventil (17) und das Durchflusssteuerventil (23), verbunden in dem Drucksteuerventil (17), umfasst, den Differenzdruck (P2-P3) über dem Durchflusssteuerventil (23) steuernd.

6. Ventilanordnung mit einem Drucksteuerventil (17), wobei das Drucksteuerventil (17) ein Ventilelement (18) umfasst, das mit einem Drosselelement (19) zusammenwirkt und einen Differenzdruck steuert, wobei die Ventilanordnung ferner ein Detektiermittel (28, 29), dazu ausgelegt, die Position des Ventilelements (18) zu messen, und einen Prozessor umfasst, wobei die gemessene Position an den Prozessor kommuniziert wird, der dazu ausgelegt ist, die gemessene Position mit einer erwarteten Position zu vergleichen, und dazu ausgelegt ist, Abweichungen zu verwenden, um die Funktionalität der Ventilanordnung abzuschätzen, und wobei die Ventilanordnung ferner dazu ausgelegt ist, gemäß dem Verfahren nach Anspruch 1 zu arbeiten.

7. Ventilanordnung nach Anspruch 6, wobei das Detektiermittel in Datenkommunikation mit einem Prozessor ist, umfassend die erwarteten Positionsdaten des Ventilelements (18) und einen Algorithmus zum Vergleichen der gemessenen Position mit der erwarteten Position.

8. Ventilanordnung nach Anspruch 6 oder 7, **dadurch gekennzeichnet, dass** ein Durchflusssteuerventil (23) in Reihe mit dem Drucksteuerventil (17) verbunden ist, wobei das Drucksteuerventil (17) den Differenzdruck (P2-P3) über dem Durchflusssteuerventil (23) steuert.

9. Ventilanordnung nach einem der Ansprüche 6 bis 8, **dadurch gekennzeichnet, dass** das Detektiermittel (28, 29) einen Positionssensor, ein Potentiometer und/oder einen Hall-Sensor (28) umfasst.

10. Ventilanordnung nach Anspruch 9, **dadurch gekennzeichnet, dass** das Detektiermittel einen Magneten (29) umfasst, wobei der Magnet (29) mit dem Ventilelement (18) verbunden ist.

11. Ventilanordnung nach einem der Ansprüche 6 bis 10, **dadurch gekennzeichnet, dass** das Ventilelement (18) in Form eines hohlen Kolbens ist, der mit einer Membran (21) verbunden ist, wobei ein Innenraum des Kolbens einen Zwischenbereich (22) bildet, wobei die Membran (21) durch einen Druck (P2) in dem Zwischenbereich (22) in eine Richtung weg von dem Drosselelement (19) und durch einen Druck stromabwärts des Durchflusssteuerventils (23) in eine Richtung zu dem Drosselelement (19) belastet wird.

12. Prozessor, dazu angepasst, eine Ventilanordnung nach einem der Ansprüche 6-11 zu steuern, und Mittel umfassend, um das Messen der Funktionalität gemäß dem Verfahren nach einem der Ansprüche 1-5 durchzuführen.

## Revendications

1. Procédé pour mesurer la fonctionnalité d'un agencement de vanne (7) comprenant une vanne de régulation de pression (17) comprenant un élément de vanne (18) coopérant avec un élément d'étranglement (19) et régulant une pression différentielle, le procédé consistant à exposer la vanne de régulation de pression (17) à une pluralité de débits s'étendant sur une plage de test, et pour chaque débit, à mesurer la position de l'élément de vanne (18) par rapport à l'élément d'étranglement (19), **caractérisé en ce que** le procédé comprend le changement du débit d'un premier débit limite de ladite plage de test à un second débit limite, et ensuite le changement dudit second débit limite audit premier débit limite, et pour chaque débit, à mesurer la position de l'élément de vanne (18) par rapport à l'élément d'étranglement (19), les données de mesure formant ainsi une hystérésis mesurée, le procédé comprenant la comparaison de cette hystérésis mesurée à une hystérésis standard attendue d'une vanne et d'un système fonctionnant généralement bien, et l'utilisation d'écarts possibles pour identifier que l'agencement de vanne ne fonctionne pas selon ladite hystérésis standard attendue.

2. Procédé selon la revendication 1, ledit débit étant ajusté par une vanne de régulation de débit (23) comprenant un élément de vanne de régulation de débit (24) et un siège de vanne (25), et ladite première limite de la plage de test correspondant à une première position d'ouverture et ladite seconde limite correspondant à une seconde position d'ouverture de la position de l'élément de vanne (18) par rapport à l'élément d'étranglement (19).

3. Procédé selon la revendication 2, l'élément de vanne (18) étant maintenu dans chaque position pendant une durée suffisante pour que la vanne de régulation de pression (17) s'ajuste pour obtenir une pression delta constante, dP, sur la vanne de régulation (17).

4. Procédé selon l'une quelconque des revendications précédentes, le temps nécessaire pour que l'élément de vanne (18) devienne sensiblement stable par rapport à l'élément d'étranglement (19), lorsque le débit a été modifié, étant utilisé comme paramètre dans la détection du fait que l'agencement de vanne ne fonctionne pas selon ladite hystérésis standard attendue.

5. Procédé selon l'une quelconque des revendications 2 à 4, ledit agencement de vanne (7) comprenant ladite vanne de régulation de pression (17) et ladite vanne de régulation de débit (23) raccordée, ladite vanne de régulation de pression (17) régulant la pression différentielle (P2-P3) sur ladite vanne de régulation de débit (23).

6. Agencement de vanne ayant une vanne de régulation de pression (17), ladite vanne de régulation de pression (17) comprenant un élément de vanne (18) coopérant avec un élément d'étranglement (19) et régulant une pression différentielle, l'agencement de vanne comprenant en outre des moyens de détection (28, 29) configurés pour mesurer la position dudit élément de vanne (18), et un processeur, ladite position mesurée étant communiquée audit processeur qui est configuré pour comparer ladite position mesurée à une position attendue et configuré pour utiliser des écarts pour estimer la fonctionnalité dudit agencement de vanne, et en ce que l'agencement de vanne est en outre configuré pour fonctionner au moyen du procédé selon la revendication 1.

7. Agencement de vanne selon la revendication 6, lesdits moyens de détection étant en communication de données avec un processeur comprenant les données de position attendue de l'élément de vanne (18) et un algorithme pour comparer la position mesurée à la position attendue.

8. Agencement de vanne selon la revendication 6 ou 7, **caractérisé en ce qu'**une vanne de régulation de débit (23) est raccordée en série avec ladite vanne de régulation de pression (17), ladite vanne de régulation de pression (17) régulant la pression différentielle (P2-P3) sur ladite vanne de régulation de débit (23).

9. Agencement de vanne selon l'une quelconque des revendications 6 à 8, **caractérisé en ce que** lesdits moyens de détection (28, 29) comprennent un capteur de position, un potentiomètre et/ou un capteur à effet Hall (28).

10. Agencement de vanne selon la revendication 9, **caractérisé en ce que** lesdits moyens de détection comprennent un aimant (29), ledit aimant (29) étant relié audit élément de vanne (18).

11. Agencement de vanne selon l'une quelconque des revendications 6 à 10, **caractérisé en ce que** ledit élément de vanne (18) est sous la forme d'un piston creux relié à une membrane (21), un espace intérieur dudit piston formant une région intermédiaire (22), ladite membrane (21) étant chargée par une pression (P2) dans ladite région intermédiaire (22) dans une direction s'éloignant dudit élément d'étranglement (19) et par une pression en aval de ladite vanne de régulation de débit (23) dans une direction vers ledit élément d'étranglement (19).

12. Processeur adapté pour réguler un agencement de vanne selon l'une quelconque des revendications 6 à 11 et comprenant des moyens pour effectuer la mesure de la fonctionnalité conformément au procédé selon l'une quelconque des revendications 1 à 5.
